# FASCICULE DE BREVET EUROPEEN

(11) **EP 4 496 384 B1**
(45) Date de publication et mention de la délivrance du brevet: **01.04.2026**
(21) Numéro de dépôt: 24186600.3
(22) Date de dépôt: 04.07.2024
(51) Int. Cl.: H04W 48/18, H04W 84/00

(54) **PROCÉDÉ D'OPTIMISATION DE LA CONNECTIVITÉ BORD/SOL POUR LE TRANSPORT FERROVIAIRE**
VERFAHREN ZUR OPTIMIERUNG DER BORD-/BODENKONNEKTIVITÄT FÜR SCHIENENVERKEHR
METHOD FOR OPTIMIZING EDGE-TO-GROUND CONNECTIVITY FOR RAIL TRANSPORT

(30) Priorité: 20.07.2023 FR 2307791
(43) Date de publication de la demande: 22.01.2025
(73) Titulaire: GTS France, 78140 Velizy Villacoublay (FR)
(72) Inventeur: CHERIF, Waël, 78140 VELIZY VILLACOUBLAY (FR); DELORME, Maxime, 78140 VELIZY VILLACOUBLAY (FR); VITRY, Christophe, 78140 VELIZY VILLACOUBLAY (FR)
(74) Mandataire: Atout PI Laplace

(56) Documents cités:
- EP-A1- 3 606 127
- CN-B- 114 007 250
- "Electronic railway equipment - Train communication network (TCN) - Part 2-6: On-board to ground communication", 14 May 2018 (2018-05-14), pages 1 - 242, XP082030066, Retrieved from the Internet <URL:https://api.iec.ch/harmonized/publications/download/270904> [retrieved on 20180514]

## Description

### Domaine technique :

L'invention se situe dans le domaine des communications radio réalisées par un terminal mobile embarqué à bord d'un train à travers différents réseaux d'accès. Plus spécifiquement, elle vise les communications bord/sol dans le cadre du transport ferroviaire.

### Technique antérieure :

Certains services ferroviaires embarqués mettent en jeu des communications bord/sol, c'est-à-dire des communications permettant de relier un dispositif embarqué dans le train à un dispositif extérieur au train à travers un ou plusieurs réseaux d'accès. Ces services sont par exemple la transmission de données correspondant à de la voix, de la vidéo, des informations de localisation, des informations relatives à des protocoles de contrôle, etc...

De par le déplacement du train, le ou les terminaux mobiles embarqués doivent régulièrement changer de réseau d'accès, afin de maintenir la connectivité avec le sol. Pour certaines applications critiques, telles que la téléconduite par exemple (conduite à distance), où des vidéos de l'environnement du train sont transmises en continu à un conducteur distant, la commutation entre deux réseaux d'accès doit être transparente, ne doit pas impacter la qualité de service, et doit se faire sans interruption de connectivité. Pour cela, il est nécessaire de coupler différentes technologies de radio communications que le véhicule est susceptible de rencontrer au cours de son trajet, et de commuter de l'une à l'autre au cours du déplacement du véhicule. C'est le concept de communications hybride, en anglais « *adaptable communications* »*.*

Une manière d'assurer la continuité des communications consiste à basculer entre les réseaux d'accès sur franchissement de coordonnées GPS ou de points kilométriques. Un tel procédé permet d'anticiper les zones blanches et les zones de pertes de couverture, mais ne prend pas en comptes les imprévus, tels que par exemple les problèmes radio, les intempéries, les pics de demande de ressources sur le réseau d'accès, etc.

Une autre manière connue permettant d'assurer la continuité des communications de manière dynamique consiste à basculer entre les réseaux d'accès en fonction de différents critères portant sur la qualité des liens radio utilisables pour l'hybridation des communications. Parmi ces mesures de qualité, on peut trouver des mesures reflétant la qualité du signal radio, et/ou des mesures propres aux réseaux, telles que des mesures de bande passante ou de la latence. Ces mesures peuvent être couplées à un mécanisme d'hybridation géographique.

Cependant, les mesures de qualité ont des limitations :
- les mesures de qualité des signaux radio ne reflètent pas toujours la qualité du lien réseau, puisqu'il est possible d'avoir une bonne qualité de signal (SNR, pour Signal to Noise Ratio, ou rapport signal à bruit), mais peu de bande passante disponible, en particulier lorsque la cellule radio est congestionnée,
- les mesures réseaux (bande passante, latence, ...) sont des mesures intrusives, qui consomment des ressources réseau. Par exemple, la mesure de latence nécessite la transmission d'un flux de données important sur le réseau d'accès, ce qui consomme des ressources radio. En outre, ces mesures sont chronophages puisqu'un temps de connexion et de test peut être requis pour obtenir les métriques réseaux nécessaires à la prise de décision, ce temps de connexion étant potentiellement incompatible avec le déplacement du véhicule.

Les mesures de qualité utilisées par l'art antérieur pour l'hybridation des communications ne tirent pas parti de la spécificité des déplacements ferroviaires, à savoir une connaissance précise de la trajectoire du train (la voie), de ses paramètres de déplacement (position, vitesse, ...), du nombre de passagers, et une connaissance assez précise du nombre de personnes aux alentours des voies (en particulier dans les stations, sur les quais, dans les trains avoisinants, etc..). Le document CN114 007 250 B décrit la sélection d'un réseau pour établir une connexion avec un serveur. Cette sélection prend en compte différents paramètres dont la charge des réseaux.

Le document EP 3 606 127 A1 décrit la sélection d'un réseau pour la connexion entre un train et un serveur basé sur la position du train.

Un objet de l'invention est donc de définir un procédé de sélection d'un réseau d'accès prenant en compte les spécificités du déplacement ferroviaire pour optimiser l'anticipation du changement de connectivité bord/sol dans un contexte de réseaux d'accès multi-technologies/multi-opérateurs.

### Résumé de l'invention :

A cet effet, la présente invention décrit un procédé de sélection d'un réseau d'accès pour la mise en œuvre d'un lien de communications entre un équipement de radiocommunications embarqué dans un véhicule ferroviaire et un équipement de radiocommunications au sol. Il est opéré lorsque l'équipement de radiocommunications embarqué dans le véhicule ferroviaire est relié à une pluralité de réseaux d'accès lui permettant de mettre en œuvre le lien de communications. Ce procédé comprend en particulier le calcul d'un score de densité d'utilisateurs potentiels associé aux réseaux d'accès, et l'utilisation de ce score de densité d'utilisateurs potentiels lors d'une prise de décision concernant la configuration du lien de communications. Ce procédé comprend :
- une première étape de détermination d'un score de densité d'utilisateurs potentiels et de comparaison de ce score de densité d'utilisateurs potentiels avec un seuil pour chacun des réseaux d'accès disponibles,
- une deuxième étape d'évaluation de la configuration optimale du lien de communications utilisant le score de densité d'utilisateurs potentiels calculé lors de la première étape (201), pour sélectionner les réseaux d'accès utilisables pour mettre en œuvre ledit lien de communications,
- une troisième étape de configuration du lien de communications conformément à la configuration optimale évaluée lors de la deuxième étape.

Selon un mode de réalisation de l'invention compatible avec le précédent, la deuxième étape comprend l'adaptation du débit dudit lien de communications en fonction du score de densité d'utilisateurs potentiels calculé lors de la première étape.

Avantageusement, la deuxième étape comprend en outre des mesures de qualité de liens radio sur les différents réseaux d'accès.

Selon un mode de réalisation de l'invention, le seuil utilisé lors de la première étape est fonction du type de réseau d'accès.

Selon un mode de réalisation particulier, le procédé de sélection d'un réseau d'accès selon l'invention comprend en outre une étape de vérification de l'applicabilité de la configuration optimale évaluée lors de la deuxième étape.

Selon un mode de réalisation particulier de l'invention, les données échangées sur le lien de communications sont des données permettant la téléconduite du véhicule ferroviaire.

L'invention porte également sur un équipement de radiocommunications destiné à être embarqué dans un véhicule ferroviaire. L'équipement comprend des moyens d'accès à une pluralité de réseaux d'accès et des moyens de calcul. Les moyens de calcul sont configurés pour mettre en œuvre un procédé de sélection d'un réseau d'accès selon l'invention.

L'invention porte également sur un système comprenant :
- un équipement de radiocommunications, destiné à être embarqué dans un véhicule ferroviaire, comprenant des moyens d'accès simultanés à une pluralité de réseaux d'accès, et
- des moyens de calcul distants de l'équipement de radiocommunications.

Les moyens de calcul distants sont configurés pour mettre en œuvre la première et la deuxième étape d'un procédé de sélection d'un réseau d'accès selon l'invention, et pour transmettre la configuration optimale calculée lors de la deuxième étape à l'équipement de radiocommunications. L'équipement de radiocommunications est configuré pour mettre en œuvre la troisième étape du procédé de sélection d'un réseau d'accès selon l'invention.

Enfin, l'invention porte sur un produit programme d'ordinateur comprenant des instructions de code de programme pour l'exécution des étapes du procédé de sélection d'un réseau d'accès selon l'invention.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente un exemple de cas opérationnel dans lequel peut être mis en œuvre un procédé de sélection d'un réseau d'accès selon un mode de réalisation de l'invention.
[Fig. 2] La figure 2 est un diagramme synoptique représentant les étapes d'un procédé de sélection d'un réseau d'accès selon un mode de réalisation de l'invention.

### Description détaillée :

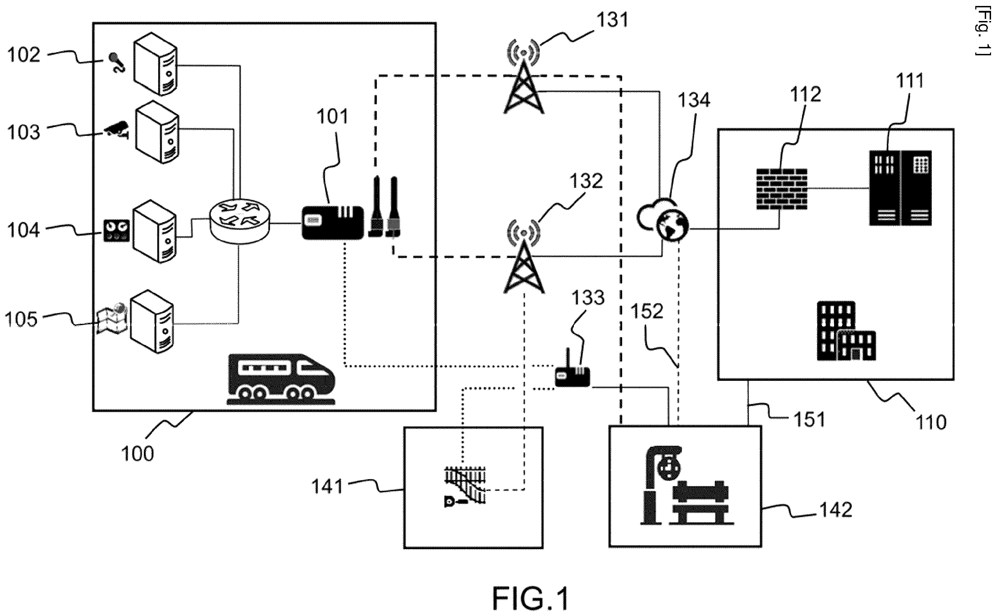

La figure 1 représente un exemple de cas opérationnel dans lequel peut être mis en œuvre un procédé de sélection d'un réseau d'accès selon un mode de réalisation de l'invention.

Ce procédé vise à déterminer le réseau d'accès à privilégier pour opérer un lien de communications entre un équipement de radiocommunications 101 embarqué dans un véhicule ferroviaire 100 et un ou plusieurs équipements distants 110 au sol, c'est-à-dire à l'extérieur du véhicule ferroviaire. L'équipement distant peut être par exemple un serveur 111.

Le lien de communications bord/sol peut par exemple être utilisé pour transmettre au serveur distant 111 des données telles que des données audio 102, des données vidéo 103, des données de signalisation 104 ou des données de positionnement 105 acquises depuis un récepteur GNSS (acronyme anglais pour *Global Navigation Satellite System,* ou système de navigation global par satellite). Le lien de communications peut également être utilisé en sens inverse, pour transmettre diverses informations à l'équipement de radiocommunications 101, comme par exemple des commandes dans le cas de la téléconduite.

L'équipement de radiocommunications 101 est configuré pour permettre la connexion simultanée sur plusieurs réseaux d'accès 131, 132, 133, afin de sélectionner le réseau d'accès le plus adapté pour mettre en œuvre le lien de communications avec le ou les équipements sol 110.

Les réseaux d'accès peuvent être n'importe quel type de réseau d'accès permettant à l'équipement de radiocommunications bord 101 d'entrer en contact directement ou indirectement avec l'équipement distant sol 110, tel que par exemple un ou plusieurs réseaux MNO (acronyme anglais pour *Mobile Network Operator,* ou opérateur de réseau mobile) publics ou privés, par exemple des réseaux 4G ou 5G, un ou plusieurs réseaux MVNO (acronyme anglais pour *Mobile Virtual Network Operator,* ou opérateur de réseau mobile virtuel), une ou plusieurs bornes Wifi, Bluetooth, ... situées en bord de voies, une liaison satellitaire, ou tout autre type de liaison sans fil. Le lien de communications peut ou non transiter par le réseau internet 134 ou par des réseaux privés. Les équipements de radiocommunications bord et sol peuvent comprendre divers équipements destinés à améliorer leur sécurité, tel que par exemple un pare-feu 112, et peuvent être configurés pour mettre en œuvre des tunnels de communication chiffrés.

L'équipement de radiocommunications bord 101 peut également être relié à divers autres équipements à travers un ou plusieurs liens d'accès, tels que par exemple un équipement 141 destiné à recueillir des informations de capteurs disposés sur les voies ferrées, un serveur 142 permettant d'obtenir des informations relatives aux stations ferroviaires, un serveur de réservation, un serveur de trafic, etc... Le cas échéant, l'équipement de radiocommunications bord 101 peut être relié à l'équipement de radiocommunications distant 110 à travers un lien réseau faible portée tel qu'un lien routeur Wifi 133, lui-même relié à un équipement, tel que l'équipement 142, relié à l'équipement sol 110 par un lien direct 151, ou par un lien 152 utilisant par exemple une connexion internet 134.

L'équipement de radiocommunications bord 101 peut être relié à un ou plusieurs réseaux d'accès lui permettant d'établir un lien de communications avec l'équipement de radiocommunications sol 110. Il comprend donc a minima une antenne radio, une ou plusieurs chaîne analogique d'émission et/ou de réception, et des moyens de calculs permettant de réaliser les traitements nécessaires pour émettre et recevoir des signaux sur les différents réseaux d'accès, ainsi que pour mettre en œuvre un procédé de sélection d'un réseau d'accès selon l'invention. Ces moyens de calculs peuvent par exemple être un microprocesseur, un DSP (sigle anglais pour *Digital Signal Processor,* ou processeur de signal numérique), un FPGA (sigle anglais pour *Field Programmable Gate Array,* ou réseau de portes programmable), un ASIC (acronyme anglais pour *Application-Specific Integrated Circuit,* ou circuit intégré propre à une application), n'importe quelle association de ces moyens, ou n'importe quel composant matériel permettant d'exécuter les fonctions précitées.

Le procédé de sélection d'un réseau d'accès parmi une pluralité de réseaux d'accès selon l'invention se différentie de l'état de l'art en ce qu'il comprend le calcul d'un score de densité associé aux réseaux d'accès disponibles (131, 132, 133), et l'utilisation de ce score de densité lors d'une prise de décision concernant la configuration du lien de communications bord/sol lorsque plusieurs réseaux d'accès sont disponibles, à savoir le réseau d'accès à utiliser et éventuellement le débit.

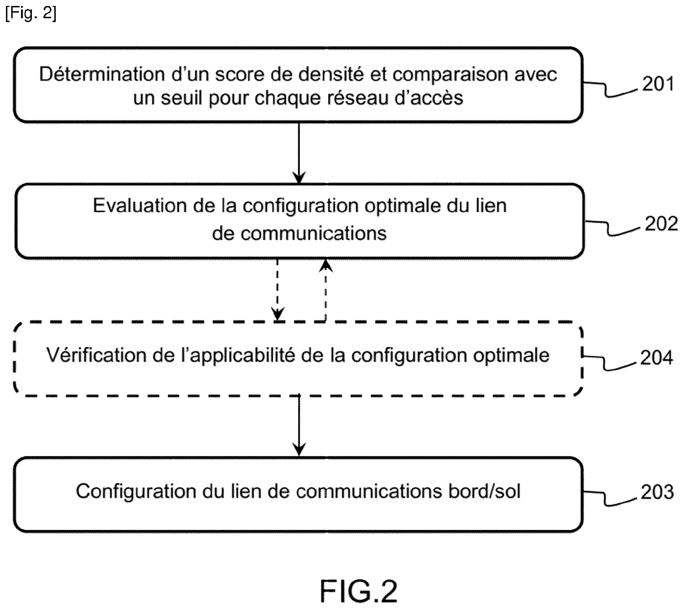

La figure 2 est un diagramme synoptique représentant les étapes d'un procédé de sélection d'un réseau d'accès selon un mode de réalisation de l'invention lorsque plusieurs réseaux d'accès sont disponibles pour la mise en œuvre du lien de communications entre un équipement bord et un équipement sol.

Le procédé comprend une étape 201 de mesure d'un score de densité associé à chacun des réseaux d'accès disponibles, à partir de différentes sources de métriques de densité et d'occupation des cellules radio récoltées. En effet, pour la plupart des réseaux d'accès, la bande passante disponible diminue lorsque le nombre, et donc la densité, d'utilisateurs augmente. La solution technique proposée ici exploite le déterminisme du trajet d'un train et la disponibilité éventuelle d'informations spécifiques ou non au domaine ferroviaire pour anticiper les reconfigurations du système de communications hybride. On entend par score de densité une valeur qualitative quant à la densité d'utilisateurs potentiels du réseau d'accès.

La densité d'utilisateurs associée à un réseau d'accès est liée à l'occupation du réseau. Elle peut être évaluée par des méthodes propres aux réseaux d'accès, par exemple des applications spécifiques permettant de faire des requêtes auprès du cœur de réseau afin d'obtenir des informations concernant le nombre d'utilisateurs de chaque cellule, comme les applications NEF (acronyme anglais pour *Network Exposure Function,* ou fonction d'exposition du réseau) pour les réseaux 5G, ou leurs équivalents pour les réseaux 4G. De cette manière, il est possible de déterminer le taux d'occupation de la cellule dans laquelle se situe l'équipement de radiocommunications bord 101, et d'en déduire un score de densité associé au réseau d'accès concerné, par exemple en calculant une densité en divisant la bande passante disponible pour la cellule par le nombre d'utilisateurs puis en associant un score à la densité mesurée.

La densité d'utilisateurs associée à un réseau d'accès peut également être évaluée par des méthodes spécifiques aux applications ferroviaires, par exemple :
- à partir des informations de vidéosurveillance, ou CCTV (sigle anglais pour *Close-Circuit TeleVision*), à bord, qui permettent d'évaluer l'occupation du train. Ces informations peuvent être utilisées pour approximer un nombre d'utilisateurs utilisant les réseaux d'accès publics disponibles, et d'estimer un score de densité associé,

- à partir des informations CCTV sur les quais, qui permettent d'évaluer l'occupation des quais. Avantageusement, une solution de comptage des foules permet de dénombrer précisément le nombre de personne sur les quais. Il est alors possible d'estimer un score de densité associé aux réseaux d'accès publics disponibles,
- à partir d'informations d'occupation des stations/trains récupérées auprès d'un serveur distant. Par exemple, il est possible de savoir assez précisément le nombre de personne dans le train et dans les trains avoisinants, à partir d'informations provenant de la billettique. Il est également possible de connaitre de manière approximative le nombre de personnes sur les quais à partir d'informations fournies par des portiques d'accès aux voies. Il est alors possible d'estimer un score de densité associé aux réseaux d'accès publics disponibles.

La densité d'utilisateurs associée à un réseau d'accès peut enfin être obtenue à partir d'informations tierces, par exemple des bases de données partagées (open Data) donnant des informations sur des évènements proches des voies pouvant impacter la densité d'utilisateurs, comme par exemple le trafic routier, la présence de manifestations, etc. Il est alors possible d'en déduire un score de densité associé aux réseaux d'accès publics disponibles.

Toutes ces informations permettent d'établir un score de densité propre à chaque type de réseau d'accès.

L'étape 201 du procédé de sélection d'un réseau d'accès selon l'invention comprend ensuite la comparaison, pour chacun des réseaux d'accès, du score de densité avec un seuil. Le seuil associé à chaque réseau d'accès peut prendre en compte les spécificités de chaque type de réseau d'accès : une même densité d'utilisateurs n'impacte pas de manière identique un réseau d'accès 4G qu'un réseau d'accès Wifi. De même, pour une densité d'utilisateurs donnée, un réseau d'accès privé sera moins impacté qu'un réseau d'accès public. Le seuil peut également tenir compte des débits requis pour le lien de communications bord/sol. Il peut être établi de manière à être le plus homogène possible entre les différents réseaux d'accès. La valeur du seuil peut être établie de manière empirique, par exemple en analysant la corrélation entre le nombre d'utilisateurs, le débit demandé et la disponibilité du réseau. Le seuil doit être positionné de sorte qu'un score de densité le dépassant indique que le réseau d'accès a de fortes chances d'être congestionné, et donc de présenter une qualité de service dégradée par rapport à sa qualité de service nominale.

Le procédé de sélection d'un réseau d'accès selon l'invention comprend ensuite une étape 202 d'évaluation de la configuration optimale du lien de communications bord/sol, compte tenu des résultats de l'étape 201. Cette étape consiste à déterminer le réseau d'accès, et éventuellement les débits, les plus adaptés pour mettre en œuvre le lien de communications bord/sol. Elle peut être mise en œuvre de diverses façons.

Selon un mode de réalisation, les réseaux d'accès dont le score de densité est supérieur au seuil à l'étape 201 sont éliminés d'une liste des réseaux d'accès utilisables pour la mise en œuvre du lien de communications bord/sol. Le réseau d'accès à utiliser est ensuite choisi parmi les réseaux d'accès résiduels de manière comparable à ce qui est fait dans les réseaux d'hybridation de l'art antérieur. Par exemple, ce choix peut être réalisé en comparant la qualité des liens radio des réseaux d'accès dont le score de densité est inférieur au seuil, en fonction de la position du train embarquant l'équipement de radiocommunications bord 101, et/ou en fonction d'autres considérations comme par exemple des considérations sur le coût des transmissions.

Avantageusement, lorsque deux réseaux d'accès ayant des scores de densité inférieurs au seuil présentent les mêmes caractéristiques (même qualité de lien radio, et/ou même coût d'utilisation, ....), le réseau d'accès à privilégier pour mettre en œuvre le lien de communications bord/sol est celui présentant le score de densité le moins élevé.

Selon un mode de réalisation, les réseaux d'accès dont le score de densité est supérieur au seuil à l'étape 201 sont éliminés d'une liste des réseaux d'accès utilisables pour la mise en œuvre du lien de communications bord/sol, puis le choix du réseau d'accès à utiliser est fait par planification, à partir d'une liste prédéterminée indiquant un ordre d'utilisation préférentiel des réseaux d'accès en fonction de la position géographique de l'équipement de radiocommunications bord 101.

Selon un autre mode de réalisation, le réseau d'accès sélectionné est le réseau d'accès ayant le plus petit score de densité.

Selon un autre mode de réalisation, lorsque tous les réseaux d'accès disponibles dépassent le seuil de densité lors de l'étape 201, le débit du lien de communications est réduit, et la comparaison entre le score de densité et le seuil est réévaluée en tenant compte cette diminution de débit. Le réseau d'accès choisi peut alors être sélectionné selon l'un des modes de réalisation décrits précédemment.

La réduction du débit du lien de communications peut se faire de différentes manières, comme par exemple :
- en ne transmettant sur le lien de communications bord/sol que les services prioritaires (voix, données, signalisation, ...),
- en diminuant la qualité de certains services, en particulier la résolution des flux de données vidéo.

De nombreux autres modes de réalisation sont possibles pour cette étape.

Enfin, le procédé de sélection d'un réseau d'accès selon l'invention comprend une étape 203 de configuration du lien de communications bord/sol conformément au réseau d'accès et paramètres de transmission (débit) déterminés lors de la deuxième étape 202. Cette étape comprend, lorsque c'est nécessaire, le reparamétrage et la reconfiguration du lien de communications assurant la connectivité bord/sol.

Le procédé de sélection d'un réseau d'accès selon l'invention peut être mis en œuvre par l'équipement de radiocommunications bord 101, mais également par un équipement distant, transmettant la configuration calculée lors de l'étape 202 à l'équipement de radiocommunications bord 101 pour qu'il mette en œuvre l'étape 203 du procédé. Cet équipement peut par exemple être la station sol 111 ou n'importe quel dispositif disposant de moyens de calcul capables de récupérer les métriques nécessaires à la mise en œuvre du procédé, d'exécuter les étapes 201 et 202, et de transmettre les informations sur la configuration du lien de communications bord/sol à l'équipement bord 101.

Le procédé peut être exécuté périodiquement, lors du passage à des points géographiques définis, lorsque la qualité du lien radio utilisé pour les communications bord/sol diminue, et/ou lorsque de nouveaux réseaux d'accès sont disponibles. Le dispositif en charge de l'exécution du procédé peut requérir de manière continue les informations nécessaires à sa réalisation, comme les informations de densité auprès des différents réseaux, des informations sur la qualité des liens radio, etc.

Un cas d'application typique du procédé selon l'invention est celui d'un train entrant dans une gare très fréquentée. La mise en œuvre du procédé de sélection d'un réseau d'accès selon l'invention permettra d'exclure des réseaux d'accès publics, potentiellement congestionnés, et d'orienter le lien de communications vers un réseau d'accès privé ou vers des communications satellitaires, qui par définition ont moins de chances d'être saturés. A l'inverse, lorsque le train entre dans une gare peu fréquentée, le procédé de sélection selon l'invention orientera le lien de communications vers un fournisseur d'accès public, qui peut présenter des coûts d'utilisation inférieurs.

Le procédé de sélection d'un réseau d'accès selon l'invention permet d'obtenir une connectivité réseau de meilleure qualité que les procédés de l'état de l'art pour les liens de communication bord/sol, en minimisant les risques d'interruption de service. Il tire parti du déterminisme des trajets ferroviaires pour définir des critères simples et efficaces de réévaluation/reconfiguration de la connectivité bord/sol. Il permet d'anticiper les problèmes de congestion et de disponibilité des réseaux, et d'adapter dynamiquement la stratégie d'hybridation à l'entourage de l'équipement de radiocommunications bord. Contrairement à l'hybridation basée exclusivement sur des métriques réseau, il peut être mis en œuvre de manière non intrusive. En effet, les informations nécessaires au calcul de densité sont disponibles chez les opérateurs ferroviaires et les opérateurs de radiocommunications.

Avantageusement, le procédé de sélection d'un réseau d'accès selon l'invention comprend une étape additionnelle 204 de vérification de l'applicabilité de la configuration optimale du lien de communications bord/sol déterminée lors de l'étape 202. Cette étape est préalable à l'étape 203 de configuration du lien de communications bord/sol.

Elle consiste à vérifier si la configuration déterminée lors de l'étape 202 est compatible avec l'environnement de l'équipement de radiocommunications bord 101, par exemple en vérifiant que :
- le réseau d'accès préconisé est bien disponible,
- le débit requis est compatible du réseau d'accès sélectionné,
- la technologie visée est compatible avec la vitesse du train (de manière à écarter par exemple une situation où un train passant en gare sans s'arrêter commuterait sur le réseau wifi de la station),
- la durée de disponibilité du réseau d'accès sélectionné est suffisante au regard déplacement du véhicule ferroviaire,
- l'équipement de radiocommunications dispose des autorisations/abonnements nécessaires pour accéder au réseau d'accès sélectionné,
- le type de trafic est compatible avec la technologie du réseau d'accès, par exemple en interdisant la transmission de trafic vidéo sur des liens présentant une bande passante limitée, ou sur des liens particulièrement sensibles à la congestion,
- etc.

Si la configuration optimale est applicable pour l'équipement de radiocommunications 101, alors le procédé passe à l'étape suivante 203. Dans le cas contraire, le procédé retourne à l'étape 202, dans le but de trouver une autre configuration du lien de communications bord/sol.

L'invention porte sur le procédé de sélection d'un réseau d'accès décrit précédemment, mais également sur :
- un équipement de radiocommunications bord 101, configuré pour mettre en œuvre un procédé de sélection d'un réseau d'accès selon un mode de réalisation de l'invention,
- un système, comprenant un moyen de calcul configuré pour mettre en œuvre les étapes 201, 202 et éventuellement 204 d'un procédé de sélection d'un réseau d'accès selon l'invention, puis pour transmettre la configuration résultante à un équipement de radiocommunications bord afin qu'il mette en œuvre l'étape 203 du procédé de sélection d'un réseau d'accès, et
- un produit programme d'ordinateur comprenant des instructions de code de programme pour l'exécution du procédé lorsque celui-ci est exécuté sur un moyen de calcul quelconque.

## Revendications

1. Procédé de sélection d'un réseau d'accès pour la mise en œuvre d'un lien de communications entre un équipement de radiocommunications (101) embarqué dans un véhicule ferroviaire (100) et un équipement de radiocommunications au sol (110, 141, 142) lorsque l'équipement de radiocommunications embarqué dans le véhicule ferroviaire est relié à une pluralité de réseaux d'accès (131, 132, 133) lui permettant de mettre en œuvre ledit lien de communications, le procédé étant **caractérisé en ce qu'**il comprend le calcul d'un score de densité d'utilisateurs potentiels associé auxdits réseaux d'accès, et l'utilisation de ce score de densité d'utilisateurs potentiels lors d'une prise de décision concernant la configuration dudit lien de communications, le procédé comprenant :
- une première étape (201) de détermination d'un score de densité d'utilisateurs potentiels et de comparaison dudit score de densité d'utilisateurs potentiels avec un seuil pour chacun des réseaux d'accès disponibles,
- une deuxième étape (202) d'évaluation de la configuration optimale du lien de communications utilisant le score de densité d'utilisateurs potentiels calculé lors de la première étape (201), pour sélectionner les réseaux d'accès utilisables pour mettre en œuvre ledit lien de communications,
- une troisième étape (203) de configuration dudit lien de communications conformément à la configuration optimale évaluée lors de la deuxième étape.

2. Procédé de sélection d'un réseau d'accès selon la revendication 1, dans lequel la deuxième étape (202) comprend l'adaptation du débit dudit lien de communications en fonction du score de densité d'utilisateurs potentiels calculé lors de la première étape (201).

3. Procédé de sélection d'un réseau d'accès selon l'une des revendications 1 ou 2, dans lequel la deuxième étape (202) comprend en outre des mesures de qualité de liens radio sur les différents réseaux d'accès.

4. Procédé de sélection d'un réseau d'accès selon l'une des revendications 1 à 3, dans lequel le seuil utilisé lors de la première étape (201) est fonction du type de réseau d'accès.

5. Procédé de sélection d'un réseau d'accès selon l'une des revendications 1 à 4, comprenant en outre une étape (204) de vérification de l'applicabilité de la configuration optimale évaluée lors de la deuxième étape (202).

6. Procédé de sélection d'un réseau d'accès selon l'une des revendications précédentes, dans lequel les données échangées sur le lien de communications sont des données permettant la téléconduite du véhicule ferroviaire (100).

7. Equipement de radiocommunications (101) destiné à être embarqué dans un véhicule ferroviaire (100), comprenant des moyens d'accès à une pluralité de réseaux d'accès (131, 132, 133), et des moyens de calcul, l'équipement de radiocommunications étant **caractérisé en ce que** les moyens de calcul sont configurés pour mettre en œuvre un procédé de sélection d'un réseau d'accès selon l'une des revendications précédentes 1 à 6

8. Système comprenant :
- un équipement de radiocommunications (101), destiné à être embarqué dans un véhicule ferroviaire (100), comprenant des moyens d'accès simultanés à une pluralité de réseaux d'accès (131, 132, 133), et
- des moyens de calcul distants dudit équipement de radiocommunications (101), **caractérisé en ce que** les moyens de calcul distants sont configurés pour mettre en œuvre la première (201) et la deuxième (202) étape d'un procédé de sélection d'un réseau d'accès selon l'une des revendications précédentes 1 à 8, et pour transmettre ladite configuration optimale calculée lors de la deuxième étape (202) à l'équipement de radiocommunications (101), et **en ce que** l'équipement de radiocommunications est configuré pour mettre en œuvre la troisième étape (203) dudit procédé de sélection d'un réseau d'accès selon l'une des revendications précédentes 1 à 6.

9. Produit programme d'ordinateur comprenant des instructions de code de programme pour l'exécution des étapes du procédé de sélection d'un réseau d'accès selon l'une des revendications 1 à 6 lorsque ledit programme d'ordinateur est exécuté sur un moyen de calcul.

## Patentansprüche

1. Verfahren zur Auswahl eines Zugangsnetzes zur Implementierung einer Kommunikationsverbindung zwischen einer an Bord eines Schienenfahrzeugs (100) verbauten Funkausrüstung (101) und einer Funkausrüstung am Boden (110, 141, 142), wenn die an Bord des Schienenfahrzeugs verbaute Funkausrüstung mit einer Vielzahl von Zugangsnetzen (131, 132, 133) verbunden ist, die es ihm ermöglichen, die Kommunikationsverbindung zu implementieren, wobei das Verfahren **dadurch gekennzeichnet ist, dass** es die Berechnung eines Dichtewertes potenzieller Nutzer, der den Zugangsnetzen zugeordnet ist, und die Verwendung dieses Dichtewertes potenzieller Nutzer bei einer Entscheidung hinsichtlich der Konfiguration der Kommunikationsverbindung umfasst, wobei das Verfahren umfasst:
- einen ersten Schritt (201) zum Bestimmen eines Dichtewertes potenzieller Nutzer und zum Vergleichen des Dichtewertes potenzieller Nutzer mit einer Schwelle für jedes der verfügbaren Zugangsnetze,
- einen zweiten Schritt (202) zum Bewerten der optimalen Konfiguration der Kommunikationsverbindung unter Verwendung des im ersten Schritt (201) berechneten Dichtewertes potenzieller Nutzer, um die nutzbaren Zugangsnetze auszuwählen, um die Kommunikationsverbindung zu implementieren,
- einen dritten Schritt (203) zum Konfigurieren der Kommunikationsverbindung entsprechend der im zweiten Schritt bewerteten optimalen Konfiguration.

2. Verfahren zur Auswahl eines Zugangsnetzes nach Anspruch 1, wobei der zweite Schritt (202) die Anpassung der Rate der Kommunikationsverbindung in Abhängigkeit vom im ersten Schritt (201) berechneten Dichtewert potenzieller Nutzer umfasst.

3. Verfahren zur Auswahl eines Zugangsnetzes nach einem der Ansprüche 1 oder 2, wobei der zweite Schritt (202) weiter Qualitätsmessungen von Funkverbindungen in den verschiedenen Zugangsnetzen umfasst.

4. Verfahren zur Auswahl eines Zugangsnetzes nach einem der Ansprüche 1 bis 3, wobei die im ersten Schritt (201) verwendete Schwelle vom Typ des Zugangsnetzes abhängig ist.

5. Verfahren zur Auswahl eines Zugangsnetzes nach einem der Ansprüche 1 bis 4, das weiter einen Schritt (204) zum Überprüfen der Anwendbarkeit der im zweiten Schritt (202) beurteilten optimalen Konfiguration umfasst.

6. Verfahren zur Auswahl eines Zugangsnetzes nach einem der vorstehenden Ansprüche, wobei die in der Kommunikationsverbindung ausgetauschten Daten solche Daten sind, welche die Fernbedienung des Schienenfahrzeugs (100) ermöglichen.

7. Funkausrüstung (101), die dazu bestimmt ist, an Bord eines Schienenfahrzeugs (100) verbaut zu werden, die Mittel zum Zugang zu einer Vielzahl von Zugangsnetzen (131, 132, 133), und Berechnungsmittel umfasst, wobei die Funkausrüstung **dadurch gekennzeichnet ist, dass** die Berechnungsmittel konfiguriert sind, um ein Verfahren zur Auswahl eines Zugangsnetzes nach einem der Ansprüche 1 bis 6 zu implementieren.

8. System, umfassend:
- eine Funkausrüstung (101), die dazu bestimmt ist, an Bord eines Schienenfahrzeugs (100) verbaut zu werden, die Mittel zum gleichzeitigen Zugang zu einer Vielzahl von Zugangsnetzen (131, 132, 133) umfasst, und
- entfernte Berechnungsmittel der Funkausrüstung (101 ), **dadurch gekennzeichnet, dass** die entfernten Berechnungsmittel konfiguriert sind, um den ersten (201) und den zweiten (202) Schritt eines Verfahrens zur Auswahl eines Zugangsnetzes nach einem der vorstehenden Ansprüche 1 bis 8 zu implementieren, und um die im zweiten Schritt (202) berechnete optimale Konfiguration an die Funkausrüstung (101) zu übertragen, und dadurch, dass die Funkausrüstung konfiguriert ist, um den dritten Schritt (203) des Verfahrens zur Auswahl eines Zugangsnetzes nach einem der vorstehenden Ansprüche 1 bis 6 zu implementieren.

9. Computerprogrammprodukt, das Programmcodeanweisungen zur Ausführung der Schritte des Verfahrens zur Auswahl eines Zugangsnetzes nach einem der Ansprüche 1 bis 6 umfasst, wenn das Computerprogramm auf einem Berechnungsmittel ausgeführt wird.

## Claims

1. Method for selecting an access network for implementing a communication link between a piece of radiocommunication equipment (101) embedded in a rail vehicle (100) and a piece of radiocommunication equipment on the ground (110, 141, 142) when the radiocommunication equipment embedded in the rail vehicle is connected to a plurality of access networks (131, 132, 133) enabling it to implement said communication link, the method being **characterized in that** it comprises the calculation of a potential user density score associated with said access networks, and the use of this potential user density score during a decision-making relating to the configuration of said communication link, the method comprising:
- a first step (201) for determining a potential user density score and comparison of said potential user density score with a threshold for each of the available access networks,
- a second step (202) of evaluating the optimal configuration of the communication link using the potential user density score calculated during the first step (201), to select the access networks which can be used to implement said communication link,
- a third step (203) of configuring said communication link according to the optimal configuration evaluated during the second step.

2. Method for selecting an access network according to claim 1, wherein the second step (202) comprises the adaptation of the flow rate of said communication link as a function of the potential user density score calculated during the first step (201).

3. Method for selecting an access network according to any one of claims 1 or 2, wherein the second step (202) further comprises radio link quality measurements on the different access networks.

4. Method for selecting an access network according to any one of claims 1 to 3, wherein the threshold used during the first step (201) is a function of the type of access network.

5. Method for selecting an access network according to any one of claims 1 to 4, further comprising a step (204) of verifying the applicability of the optimal configuration evaluated during the second step (202).

6. Method for selecting an access network according to any one of the preceding claims, wherein the data exchanged over the communication link are data enabling the telecontrol of the rail vehicle (100).

7. Radiocommunication equipment (101) intended to be embedded in a rail vehicle (100), comprising access means to a plurality of access networks (131, 132, 133), and calculation means, the radiocommunication equipment being **characterized in that** the calculation means are configured to implement a method for selecting an access network according to any one of preceding claims 1 to 6.

8. System comprising:
- radiocommunication equipment (101), intended to be embedded in a rail vehicle (100), comprising simultaneous access means to a plurality of access networks (131, 132, 133), and
- calculation means remote from said radiocommunication equipment (101), **characterized in that** the remote calculation means are configured to implement the first (201) and the second (202) step of a method for selecting an access network according to any one of preceding claims 1 to 8, and to transmit said optimal configuration calculated during the second step (202) to the radiocommunication equipment (101), and **in that** the radiocommunication equipment is configured to implement the third step (203) of said method for selecting an access network according to any one of preceding claims 1 to 6.

9. Computer program product comprising program code instructions for carrying out the steps of the method for selecting an access network according to any one of claims 1 to 6, when said computer program is executed on a calculation means.
